# DEMANDE DE BREVET EUROPEEN

(11) **EP 1 150 110 A1**
(43) Date de publication de la demande: **31.10.2001**
(21) Numéro de dépôt: 01401048.2
(22) Date de dépôt: 25.04.2001
(51) Int. Cl.: G01M 3/36

(54) **Dispositif de contôle de l'étanchéité du système de fermeture d'un appareil à pression**

(30) Priorité: 28.04.2000 FR 0005447
(71) Demandeur: BOYER SA, 33170 Gradignan (FR)
(72) Inventeur: Carme, Jacques, 33830 Belin-Beliet (FR)
(74) Mandataire: Dronne, Guy

(57) **Abrégé**

L'invention concerne un dispositif de contrôle de l'étanchéité relative du système de fermeture d'un appareil à pression, à au moins une pression déterminée, comportant un couvercle (10) amovible apte à s'appliquer sur l'ouverture d'un récipient. Ledit dispositif comprend : au moins une pièce de liaison oblongue (22) réglable pour relier ledit couvercle (10) audit récipient ; des moyens de mesure (38, 36) solidaires de ladite pièce de liaison oblongue (22) pour mesurer la valeur de la force de tension s'exerçant sur ladite pièce de liaison oblongue (22) et des moyens de comparaison (42) pour comparer la valeur de ladite force de tension mesurée avec au moins une valeur de seuil préétablie, correspondant à une pression déterminée, lesdits moyens de comparaison (42) fournissant un signal correspondant à un état étanche dudit système de fermeture si ladite tension mesurée est supérieure à ladite valeur de seuil préétablie.

## Description

La présente invention concerne un dispositif de contrôle de l'étanchéité relative du système de fermeture d'un appareil à pression, à au moins une pression déterminée, comportant un couvercle amovible apte à s'appliquer sur l'ouverture d'un récipient.

Un domaine d'application envisagé est notamment mais non exclusivement celui des systèmes de fermeture des cuves.

Des dispositifs de fermeture des appareils à pression comportant une ouverture surmontée d'une virole sur laquelle vient s'appliquer une porte maintenue par des goujons sont bien connus. La porte est constituée d'un portillon, généralement circulaire ou elliptique, monté à pivotement sur la virole au moyen d'une charnière, et vient en appui sur le bord périphérique de la virole. Le portillon est maintenu contre la virole au moyen de goujons filetés montés à pivotement sur le pourtour de la virole et dont les manettes vissables viennent en appui sur des chapes solidaires du portillon.

Le portillon et la virole sont généralement réalisés dans le même métal, identique à celui de la cuve, et pour assurer l'étanchéité on interpose entre le portillon et la virole un joint en élastomère que l'on comprime partiellement en pressant le portillon sur le bord périphérique de la virole en serrant les têtes de goujon dans les chapes du portillon.

L'étanchéité de la fermeture est relative à la pression interne de la cuve et est réalisée par le serrage manuel des têtes de goujon dans les chapes par un opérateur. Ce dernier détermine, par expérience, la tension approximative qu'il doit exercer sur les têtes de goujon pour que la fermeture soit étanche. Cette tension est variable en fonction des applications envisagées.

Un problème qui se pose, et que vise à résoudre la présente invention, est de fournir un dispositif qui permette non seulement de contrôler l'étanchéité de la fermeture de façon à éviter qu'elle soit mesurée de façon approximative par l'opérateur, mais également de produire un signal correspondant à un état étanche du système de fermeture.

Pour atteindre ce but, selon l'invention, le dispositif de contrôle de l'étanchéité relative du système de fermeture d'un appareil à pression, à au moins une pression déterminée, comportant un couvercle amovible apte à s'appliquer sur l'ouverture d'un récipient se caractérise en ce qu'il comprend :
- au moins une pièce de liaison oblongue réglable pour relier ledit couvercle audit récipient ;
- des moyens de mesure solidaires de ladite pièce de liaison oblongue pour mesurer la valeur de la force de tension s'exerçant sur ladite pièce de liaison oblongue ; et
- des moyens de comparaison pour comparer la valeur de ladite force de tension mesurée avec au moins une valeur de seuil préétablie, correspondant à une pression déterminée, lesdits moyens de comparaison fournissant un signal correspondant à un état étanche dudit système de fermeture si ladite tension mesurée est supérieure à ladite valeur de seuil préétablie.

Ainsi, une caractéristique du dispositif de contrôle réside dans le mode de mesure de l'étanchéité qui est donnée de manière indirecte par la pression qu'exerce le portillon sur le bord périphérique de la virole, cette pression étant elle-même proportionnelle à la tension qui s'exerce sur la pièce de liaison. En effet, la pression du portillon sur la virole est sensiblement exclusivement due aux pièces de liaison qui sont les seuls moyens de liaison entre le portillon et la virole lorsque l'ouverture est fermée.

La mise en oeuvre du dispositif se fait de manière classique ; l'opérateur, après avoir rabattu le portillon sur le bord périphérique de la virole, engage la pièce de liaison et commence à appliquer progressivement une force de tension sur ladite pièce. Des moyens de mesure solidaires de la pièce de liaison fournissent un signal proportionnel à la force de tension qui s'exerce sur la pièce de liaison, à des moyens de comparaison qui comparent la valeur du signal reçu à une valeur de seuil préétablie. Cette valeur de seuil a été déterminée au préalable et elle est associée à une pression interne de la cuve. On comprend que plus la pression interne de la cuve est grande plus la pression du portillon sur le bord périphérique de la virole doit être importante pour conserver l'étanchéité de la fermeture.

Les moyens de comparaison fournissent un signal correspondant à un état étanche de la fermeture lorsque la valeur de la force de tension mesurée par les moyens de mesure est supérieure à la valeur de seuil préétablie. Le signal fourni peut servir à allumer une lampe témoin signalant à l'opérateur que la fermeture est étanche et/ou peut servir à commander des ouvertures de vannes, des pompes aptes à introduire des fluides dans la cuve ou à commander un agitateur. xx

Selon un mode préféré de mise en oeuvre, le dispositif comporte une pluralité de pièces de liaison dont la valeur des forces de tension mesurées est comparée à une valeur de seuil préétablie, les moyens de comparaison fournissant un signal correspondant à un état étanche du système de fermeture lorsque la valeur de chacune des forces de tension est supérieure à ladite valeur de seuil préétablie.

Bien que le dispositif puisse fonctionner avec une seule pièce de liaison réglable diamétralement opposée à la charnière d'articulation du portillon sur la virole, on comprend que la pression à appliquer sur le portillon contre la virole est mieux maîtrisée par au moins deux pièces de liaison diamétralement opposées et a fortiori par une pluralité de pièces de liaison symétriquement fixées sur le pourtour de la virole et du portillon.

La mesure de la tension s'exerçant sur les pièces de liaisons est également fournie au comparateur qui compare toutes les valeurs de tension des pièces de liaison à une valeur seuil préétablie et qui fournit un signal correspondant à un état étanche de la fermeture lorsque la valeur de toutes les forces de tension est supérieure à la valeur seuil préétablie.

Selon encore un mode préféré de mise en oeuvre de l'invention les moyens de comparaison sont aptes à comparer la valeur de la tension mesurée à une pluralité de valeurs de seuil préétablies correspondant à une pluralité de pressions déterminées.

On comprend que la valeur de seuil préétablie est fonction de la pression interne qui règne dans la cuve et que cette pression est fonction des applications auxquelles ladite cuve est destinée. Afin d'adapter les dispositifs à des applications et à des pressions différentes on peut augmenter le nombre de pièces de liaison à la périphérie du portillon, mais on peut également prévoir différentes valeurs de seuil.

Ainsi, de façon préférentielle, la dimension des pièces de liaison est sensiblement proportionnelle à la valeur de seuil prédéterminée.

De préférence la pièce de liaison est constituée d'un goujon sur la paroi de la tige duquel sont fixées une pluralité de jauges de contrainte aptes à fournir un seul signal proportionnel à l'allongement longitudinal de ladite tige.

En fonction de l'application à laquelle la cuve est destinée, la pression interne maximale est déterminée. En conséquence, on peut prévoir le diamètre de la tige des pièces de liaison en fonction de cette pression interne maximale.

Le goujon est constitué d'une tige filetée dans une de ses extrémités, sa seconde extrémité étant montée à pivotement selon un axe tangentiel au pourtour de la virole. La tête du goujon est vissée à l'extrémité filetée de la tige et permet le serrage du goujon. La tige, dans sa partie non filetée, comporte des jauges de contrainte permettant de fournir des signaux électriques proportionnels à la valeur de la force de traction qui s'exerce sur les portions de surface sur lesquelles les jauges sont fixées. Le traitement de ces signaux permet de déterminer une valeur de la tension longitudinale qui s'exerce sur la tige.

Avantageusement, les jauges de contraintes sont appariées, la première étant fixée longitudinalement sur la tige et la deuxième étant fixée transversalement à l'aplomb de la première. Cette disposition particulière permet de prendre en compte les contraintes de flexion et les contraintes thermiques afin d'obtenir un signal de tension correspondant uniquement à la contrainte longitudinale.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique en coupe partielle axiale suivant I-I de la figure 2 montrant une pièce de liaison reliant le portillon à la virole, perpendiculairement au plan du portillon, et des moyens de mesure et de comparaison de la tension s'exerçant sur ladite pièce de liaison ; et
- la Figure 2, est une vue schématique de dessus du portillon comportant trois pièces de liaisons reliées électriquement aux moyens de comparaison.

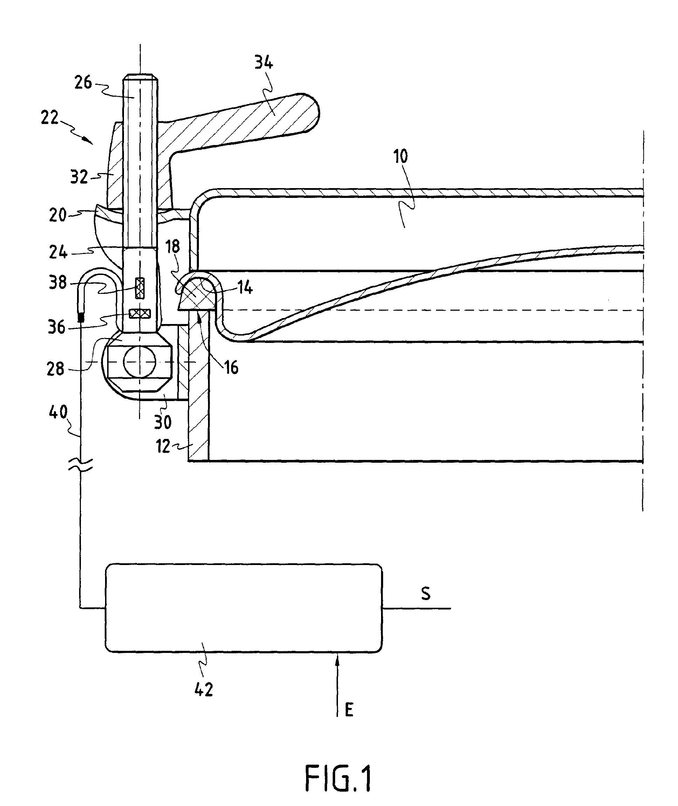

On se référera tout d'abord à la Figure 1 pour décrire un premier mode de réalisation du dispositif dans le cas où il comporte une seule pièce de liaison.

Le dispositif comprend un couvercle ou portillon 10 en appui sur une virole 12 soudée sur le pourtour de l'ouverture d'une cuve non représentée. Le portillon 10 et la virole 12 sont constitués en acier inoxydable. Cependant, d'autres matériaux pourraient être utilisés. Le portillon 10 présente une rainure continue 14 dans sa périphérie inférieure correspondant au bord périphérique 16 de la virole 12. Ainsi, lorsque le portillon 10 est en appui sur la virole 12, le bord périphérique 16 s'encastre dans la rainure 14. Par ailleurs, un joint en caoutchouc 18 est interposé entre la rainure 14 et le bord périphérique 16 de manière à parfaire l'étanchéité.

En outre, le portillon 10 comporte une chape 20 fixée dans son pourtour sur sa paroi latérale et dont le plan moyen est sensiblement parallèle au plan moyen du portillon. Le portillon 10 est appliqué sur la virole 12 de façon que la chape 20 se situe au regard d'une pièce de liaison 22.

La pièce de liaison 22 formant goujon comporte une tige 24 dont l'extrémité supérieure 26 est filetée et dont l'extrémité inférieure 28 présente un perçage transversal. En outre, une pièce 30 en forme de U est fixée sur le bord latéral de la virole 12 de manière à ce que la paroi externe du fond de la pièce 30 soit soudée sur la virole et à ce que ses deux branches opposées soient dans un plan moyen sensiblement parallèle au plan moyen du portillon 10. Ainsi, l'extrémité inférieure 28 de la tige 24 est maintenue entre les deux branches de la pièce 30 en forme de U au moyen d'une tige transversale. Grâce à ce montage, la tige 24 est apte à pivoter autour de la tige transversale dans un plan sensiblement axial perpendiculaire au plan moyen du portillon 10.

De plus, un écrou 32 comportant une manette 34 est vissable sur l'extrémité supérieure 26 de la tige 24. Ainsi, l'écrou 32 s'applique contre la chape 20 et son serrage permet de maintenir et de rapprocher le portillon 10 de la virole 12 de manière à comprimer le joint 18 et à assurer l'étanchéité.

Le dispositif de contrôle comprend des moyens de mesure de la force de tension longitudinale, s'exerçant sur la pièce de liaison 22, de manière à fournir une valeur qui est proportionnelle à la pression que le portillon 10 exerce sur le joint 18 et sur le bord périphérique 12 et qui est une mesure indirecte de l'étanchéité de la fermeture.

Pour ce faire, la tige 24, qui est l'élément sur lequel toutes les forces de tension s'appliquent, est munie de jauges de contrainte 36 et 38, lesquelles fournissent des signaux électriques proportionnels aux forces qui s'appliquent sur leurs capteurs. Les jauges étant collées sur la tige 24, les déformations qu'elle subit entraînent la déformation du capteur des jauges qui entraîne la production du signal.

Sur la Figure 1 on a représenté deux jauges de contraintes 38 et 36 fixées sur une première portion de paroi de la tige 24 au niveau de la partie non filetée ; les deux jauges sont perpendiculaires entre elles, à proximité l'une de l'autre et leur axe de symétrie commun est longitudinal. De la même façon et de manière symétrique deux jauges de contrainte, non représentées, sont fixées sur la portion de paroi diamétralement opposée à la première.

L'ensemble des signaux collectés au moyen de ces quatre jauges de contrainte permettent de fournir un signal débarrassé des artefacts dus aux autres contraintes qui peuvent s'exercer sur la tige 24, en particulier des contraintes thermiques ou des contraintes de flexion. Ainsi, on obtient un signal uniquement proportionnel à la tension longitudinale qui s'exerce sur la tige 24.

Les signaux électriques sont transmis par réseau filaire 40 à des moyens de comparaisons 42. Ces moyens de comparaison 42 comportent une entrée pour l'alimentation électrique et une sortie apte à délivrer un signal tout ou rien.

Selon un mode de réalisation préférentiel, la dimension des pièces de liaison est sensiblement proportionnelle à la valeur de seuil prédéterminée. Ainsi, on adapte les dimensions des pièces de liaison aux tensions qu'elles sont susceptibles de supporter, et les jauges de contrainte à la valeur des signaux qu'elles sont susceptibles de mesurer.

En conséquence, on prévoit plusieurs types de pièces de liaison dont la section varie avec la tension qu'elles sont susceptibles de supporter et généralement avec l'application à laquelle est destinée la cuve fermée par le dispositif de sécurité. Par ailleurs, on adapte les jauges de contrainte aux différents diamètres des tiges des pièces de liaison.

Selon ce mode de réalisation particulier, la valeur de seuil choisie, qui est toujours fonction de la pression interne que l'appareil à pression est susceptible de subir, est également déterminée par le choix du type de pièce de liaison. En effet, la force de tension que cette pièce de liaison est susceptible de subir doit bien entendu être supérieure à la valeur de seuil et par conséquent, de manière pratique, pour éviter toute détérioration de la pièce, on détermine une valeur de seuil par rapport à la section de la tige de la pièce de liaison.

A titre d'exemple, on associe à une tige présentant un diamètre de 12 mm une valeur de seuil correspondant à 250 déca N, pour une tige de 14 mm, 500 déca N ou, pour une tige de 18 mm, 750 déca N.

Ainsi, on fait un choix de dimensions de pièce de liaison en fonction de l'application envisagée et des pressions que la cuve est susceptible de subir. Les moyens de comparaison, dans ce cas, sont préprogrammés et contiennent les trois valeurs de seuil qui peuvent être sélectionnées par un contacteur.

La valeur de seuil est donc introduite dans les moyens de comparaison 42 au moyen du contacteur. On comprend que la mesure du signal ou la mesure de la tension dans la tige 24 de la pièce de liaison 22 revient au même puisque le signal est dans une certaine limite une fonction linéaire de la force de tension.

Ainsi, le dispositif est programmé et est apte à être utilisé dans les conditions de fonctionnement normal. Dès que la fermeture de la cuve est réalisée en appliquant le portillon 10 sur la virole 12, on effectue le serrage progressif de la pièce de liaison 22 ; de manière séquentielle ou continue les moyens de comparaison 42 comparent la valeur du signal reçu des moyens de mesures 38 et 36 à la valeur de seuil préétablie et introduite dans lesdits moyens de comparaison au préalable. Dès que la valeur du signal reçu est supérieure à la valeur de seuil, les moyens de comparaison fournissent un signal de sortie S correspondant à un état étanche du système de fermeture. Ce signal peut commander la fermeture d'un commutateur sur un dispositif lumineux apte à fournir un signal visuel témoignant de l'état d'étanchéité de la fermeture. Cependant, le signal peut également commander tout dispositif apte à effectuer des transferts de fluides vers la cuve.

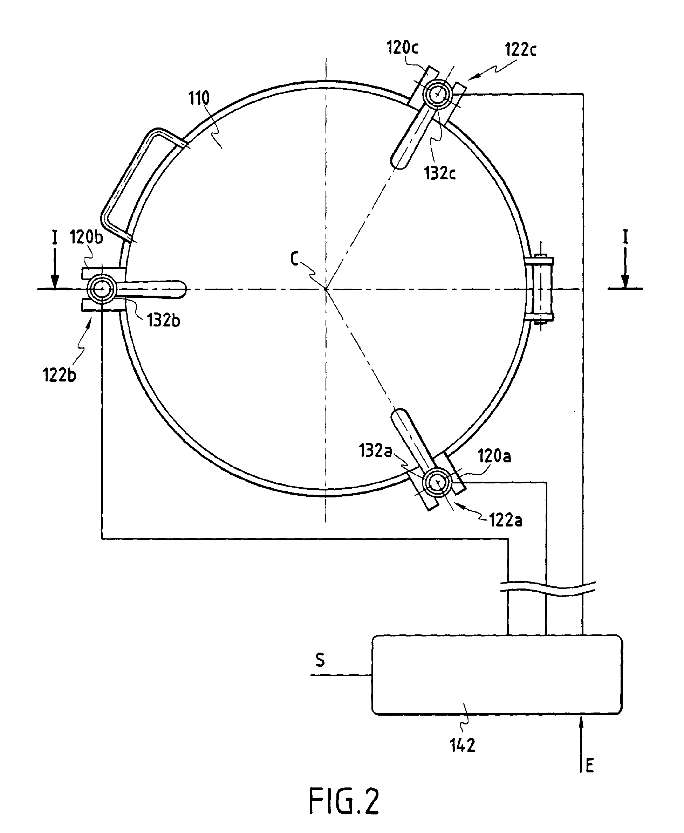

La description ci-dessus concerne le contrôle de la fermeture d'une seule pièce de liaison. On se référera maintenant à la Figure 2 pour décrire un deuxième mode de réalisation selon lequel le dispositif comporte trois pièces de liaison.

Le portillon 110 est maintenu sur la virole par trois pièces de liaison 122a, 122b, 122c qui, prisent deux à deux, forment avec le centre C du portillon 110 un angle de 120° de manière à diviser de façon sensiblement équivalente la force de tension sur chaque pièce de liaison.

Les valeurs du signal de la mesure de tension sont comparées à une même valeur de seuil qui est, comme précédemment, préétablie et introduite dans les moyens de comparaison. Bien évidemment, on comprend que cette valeur de seuil, pour une même pression interne de la cuve, ne peut être identique à la précédente puisque la force de tension s'exerce dans ce mode de réalisation sur trois pièces de liaison alors qu'elle s'exerçait sur une seule pièce dans le premier mode de réalisation.

Tout comme dans le mode de réalisation précédent, dès que le portillon 110 est refermé sur l'ouverture et appliqué sur la virole on engage les pièces de liaison 122a, 122b, 122c respectivement dans les chapes 120a, 120b, 120c, et on serre progressivement les écrous 132a, 132b, 132c. Les moyens de comparaison comparent les valeurs de signal de chaque pièce de liaison données par les moyens de mesure, à la valeur de seuil, et fournissent trois signaux distincts correspondant à une valeur de signal supérieure à la valeur de seuil et/ou un signal unique correspondant à un état étanche du système de fermeture lorsque toutes les valeurs de signal sont supérieures à la valeur de seuil.

Les valeurs de seuil préétablies dans les deux modes de réalisation précédents sont prédéterminées par le choix d'un type de pièce de liaison présentant une certaine taille compatible avec les forces de tension que peuvent subir les tiges desdites pièces de liaison, et les jauges de contrainte sont aptes à mesurer des signaux correspondant à ces valeurs de seuil.

Dans un mode de réalisation particulier, non représenté, on prévoit que le nombre de pièces de liaison est supérieur à trois. Cette configuration permet de mettre en oeuvre des dispositifs de contrôle d'étanchéité pour des applications où la pression de la cuve est telle que trois pièces de liaison d'un type déterminé ne sont pas suffisamment résistantes.

Ainsi, au lieu d'utiliser des pièces de liaison de plus gros diamètre on peut augmenter le nombre de pièces de liaison à la périphérie du portillon. Cette disposition permet de standardiser la production des pièces de liaison et de ne produire qu'un seul type de pièce correspondant à une seule valeur de seuil de tension.

## Revendications

1. Dispositif de contrôle de l'étanchéité relative, du système de fermeture d'un appareil à pression, à au moins une pression déterminée, comportant un couvercle (10) amovible apte à s'appliquer sur l'ouverture d'un récipient , **caractérisé en ce qu'**il comprend :
- au moins une pièce de liaison oblongue (22, 122a, 122b, 122c) réglable pour relier ledit couvercle (10) audit récipient,
- des moyens de mesure (38, 36) solidaires de ladite pièce de liaison oblongue (22, 122a, 122b, 122c) pour mesurer la valeur de la force de tension s'exerçant sur ladite pièce de liaison oblongue (22, 122a, 122b, 122c) ; et
- des moyens de comparaison (42, 142) pour comparer la valeur de ladite force de tension mesurée avec au moins une valeur de seuil préétablie, correspondant à une pression déterminée, lesdits moyens de comparaison (42, 142) fournissant un signal correspondant à un état étanche dudit système de fermeture si ladite tension mesurée est supérieure à ladite valeur de seuil préétablie.

2. Dispositif de contrôle de l'étanchéité relative du système de fermeture d'un appareil à pression selon la revendication 1, **caractérisé en ce qu'**il comporte une pluralité de pièces de liaison (122a, 122b, 122c) dont la valeur des forces de tension mesurées est comparée à une valeur de seuil préétablie, les moyens de comparaison (142) fournissant un signal correspondant à un état étanche du système de fermeture lorsque la valeur de chacune des forces de tension est supérieure à ladite valeur de seuil préétablie.

3. Dispositif de contrôle de l'étanchéité relative du système de fermeture d'un appareil à pression selon la revendication 1 ou 2, **caractérisé en ce que** lesdits moyens de comparaison (42, 142) sont aptes à comparer la valeur de la tension mesurée à une pluralité de valeurs de seuil préétablies correspondant à une pluralité de pressions déterminées.

4. Dispositif de contrôle de l'étanchéité relative du système de fermeture d'un appareil à pression selon l'une quelconque des revendications 1 à 3, **caractérisé en ce que** la dimension des pièces de liaison est sensiblement proportionnelle à la valeur de seuil prédéterminée.

5. Dispositif de contrôle de l'étanchéité relative du système de fermeture d'un appareil à pression selon l'une quelconque des revendications 1 à 4, **caractérisé en ce que** ladite pièce de liaison (22, 122a, 122b, 122c) est constituée d'un goujon sur la paroi de la tige (24) duquel sont fixées une pluralité de jauges de contrainte (36, 38) aptes à fournir un seul signal proportionnel à l'allongement longitudinal de ladite tige (24).

6. Dispositif de contrôle de l'étanchéité relative du système de fermeture d'un appareil à pression selon la revendication 5, **caractérisé en ce que** les jauges de contraintes (36, 38) sont appariées, la première (38) étant fixée longitudinalement sur la tige (24) et la deuxième (36) étant fixée transversalement à l'aplomb de la première.
